# EUROPÄISCHE PATENTANMELDUNG

(11) **EP 0 668 146 A1**
(43) Veröffentlichungstag der Anmeldung: **23.08.1995**
(21) Anmeldenummer: 95890029.2
(22) Anmeldetag: 07.02.1995
(51) Int. Cl.: B29C 70/38

(54) **Verfahren und Vorrichtung zum Herstellen eines Verbundwerkstückes**

(30) Priorität: 18.02.1994 AT 328/94
(71) Anmelder: GFM Gesellschaft für Fertigungstechnik und Maschinenbau Aktiengesellschaft, A-4403 Steyr (AT)
(72) Erfinder: Blaimschein, Gottfried, Dipl.-Ing., A-4407 Steyr (AT)
(74) Vertreter: Hübscher, Helmut, Dipl.-Ing.

(57) **Zusammenfassung**

Zum Herstellen eines Verbundwerkstückes aus einer Mehrzahl von Einzelzuschnitten (Z) werden aus einem zusammen mit einer Trägerfolie (T) als Band (B) von einer Spenderrolle (5) abgewikkelten Flachmaterial (F) die Einzelzuschnitte (Z) ohne ein Durchtrennen der Trägerfolie (T) ausgeschnitten, von der Trägerfolie (T) abgenommen und zum Werkstuckaufbau in einer bestimmten Reihenfolge und Anordnung unter optischer Anzeige der jeweiligen Einlegestelle in eine Form (41) eingelegt.

Um den Herstellungsvorgang vereinfachen und rationalisieren zu können, werden die Zuschnitte (Z) in einer zum Einlegen umgekehrten Reihenfolge fortlaufend aus dem Flachmaterial (F) ausgeschnitten und mit der Trägerfolie (T) auf eine Speicherrolle (6) aufgewickelt, worauf dann das Band (B) von der Speicherrolle (6) in durch die aufeinanderfolgenden Zuschnitte (Z) vorgegebenen Schritten abgewickelt und bei jedem Abwickelschritt ein Zuschnitt (Z) vom Band (B) abgenommen und an der angezeigten Stelle in die Form (41) eingelegt wird.

## Beschreibung

Die Erfindung bezieht sich auf ein Verfahren zum Herstellen eines Verbundwerkstückes aus einer Mehrzahl von Einzelzuschnitten, nach dem aus einem zusammen mit einer Trägerfolie als Band von einer Spenderrolle abgewickelten Flachmaterial die Einzelzuschnitte ohne ein Durchtrennen der Trägerfolie ausgeschnitten, von der Trägerfolie abgenommen und zum Werkstückaufbau in einer bestimmten Reihenfolge und Anordnung unter optischer Anzeige der jeweiligen Einlegestelle in eine Form eingelegt werden.

Der Aufbau eines Verbundwerkstückes aus einzelnen Zuschnitten erlaubt es, Materialeigenschaften für das Verbundwerkstück zu kombinieren und beispielsweise richtungsorientierte Festigkeitseigenschaften der Zuschnitte zur Herstellung eines Werkstückes mit speziellen Eigenschaften zu nutzen. Die Zuschnitte bestehen daher auch meist aus faserverstärkten Kunststoffen, insbesondere Prepregs, und führen dann auf Grund der vorbestimmten Reihenfolge und Anordnung beim Werkstückaufbau zu den gewünschten Werkstückeigenschaften. Werden Zuschnitte aus Prepregs od. dgl. verwendet und diese in Einlegeformen eingelegt, lassen sich auch räumlich gestaltete Verbundwerkstücke herstellen, wobei nach dem Einlegen der Zuschnitte in die Form eine Wärme- und Druckbehandlung zum Aushärten der Zuschnitte und zum Fertigstellen des Werkstückes führt. Um die gewünschte Verbundwirkung erreichen zu können, kommt es auf die Lage, die Anordnung und Reihenfolge der einzulegenden Zuschnitte an und auch das Ausschneiden dieser Zuschnitte ist von den jeweiligen Materialeigenschaften des Ausgangsmaterials abhängig. So gibt es bisher bereits rechnergesteuerte Schneidmaschinen zum Ausschneiden von Zuschnitten aus entsprechendem Flachmaterial (AT-B 393 983), wobei die ausgeschnittenen Zuschnitte noch auf der das Flachmaterial tragenden Trägerfolie verbleiben und auf eine Speicherrolle aufgewickelt werden können. Zum Einlegen der Zuschnitte in die Einlegeform gibt es auch schon eine spezielle Einlegestation, in der oberhalb der Einlegeform ein optisches Anzeigegerät, beispielsweise ein Lasergerät, angeordnet ist, mit dessen Hilfe die Umrißform der jeweils einzulegenden Zuschnitte an der betreffenden Einlegestelle in die Form projiziert wird, so daß auch bei einem händischen Einlegen der Zuschnitte diese in aufbaurichtiger Reihenfolge, Anordnung und Lage eingelegt werden können. Dieses Einlegen ist allerdings trotz der optischen Hilfe recht umständlich, da die einzelnen Zuschnitte von der jeweiligen Arbeitskraft aus einer Mehrzahl zur Verfügung stehender Zuschnitte herausgefunden und vom aufgebreiteten Bandmaterial abgenommen werden müssen, was nicht nur zu Fehlern führt, sondern auch Schwierigkeiten beim Abnehmen der Zuschnitte von der Trägerfolie mit sich bringt. Darüber hinaus ist die Handhabung des auf die Speicherrolle aufgewikkelten Bandes zum Abnehmen der ausgeschnittenen Zuschnitte wegen des Fehlens einer geeigneten Abnahmeeinrichtung unbefriedigend, so daß das Abnehmen der Zuschnitte noch in der Schneidmaschine erfolgt, und nur einen langsamen Arbeitsablauf erlaubt.

Neben diesem halbautomatischen Herstellen von Verbundwerkstücken gibt es auch schon eine vollautomatische Anlage, bei der eine Kassette das bandförmige Ausgangsmaterial aufnimmt und die Kassette zuerst in eine Schneidstation zum Ausschneiden der Zuschnitte und dann in einen speziellen Legekopf einer Legeeinrichtung zum direkten Verlegen der Zuschnitte eingesetzt wird. Diese Anlage ist daher mit einem großen konstruktiven Aufwand verbunden und erlaubt nur das Verlegen von mit entsprechendem Abstand hintereinander aus dem Flachmaterialband ausgeschnittenen Zuschnitten, wodurch sich solche Anlagen auch vor allem für die Serienfertigung eignen.

Der Erfindung liegt daher die Aufgabe zugrunde, diese Mängel zu beseitigen und ein Verfahren der eingangs geschilderten Art anzugeben, das den Herstellungsablauf bei der Fertigung von Verbundwerkstücken vereinfacht und beschleunigt und Legefehler zu vermeiden hilft. Außerdem soll eine Vorrichtung zur rationellen Durchführung dieses Verfahrens geschaffen werden.

Die Erfindung löst diese Aufgabe dadurch, daß die Zuschnitte in einer zum Einlegen umgekehrten Reihenfolge fortlaufend aus dem Flachmaterial ausgeschnitten und mit der Trägerfolie auf eine Speicherrolle aufgewickelt werden und daß dann das Band von der Speicherrolle in durch die aufeinanderfolgenden Zuschnitte vorgegebenen Schritten abgewickelt und bei jedem Abwickelschritt ein Zuschnitt vom Band abgenommen und an der angezeigten Stelle in die Form eingelegt wird. Werden die Zuschnitte in gegenüber dem Verlegen umgekehrter Reihenfolge fortlaufend aus dem Materialband ausgeschnitten und auf eine Speicherrolle aufgewickelt, können dann beim Abwickeln der Speicherrolle diese Zuschnitte einzeln nacheinander in nun richtiger Reihenfolge von der Trägerfolie des Bandes abgenommen und sofort legegerecht in die Einlegeform eingelegt werden. Beim Abwickeln des Bandes von der Speicherrolle wird dieses Schritt für Schritt angehalten, um das Abnehmen zu erleichtern, und durch die optische Anzeige wird der Arbeitskraft sofort die richtige Lage dieses gerade abgenommenen Zuschnittes in der Einlegeform angezeigt, so daß es zu einem schnellen und vor allem auch fehlerfreien Abnehmen und Einlegen der Zuschnitte kommt.

Wird das Band beim Abwickeln von der Speicherrolle über eine Abnahmekante od. dgl. umgelenkt und bei jedem Abwickelschritt so angehalten, daß das in Abwickelrichtung vordere Ende eines Zuschnittes jeweils gerade über die Abnahmekante abnahmegerecht vorsteht, braucht zum Abnehmen der Zuschnitte dieses abstehende Ende nur mit den Händen ergriffen und von der Trägerfolie abgezogen zu werden und die Arbeitskraft hat den jeweiligen Zuschnitt legerichtig in der Hand, wodurch umständliche und zeitraubende Handgriffe zum Ablösen der Zuschnitte von der Trägerfolie unnötig sind.

Um das Abnehmen längerer Zuschnitte zu erleichtern, wird das Band nach dem schrittbedingten Anhalten in Abhängigkeit von der jeweiligen Zuschnittlänge weiterbewegt, so daß diese Bandbewegung das Abziehen der längeren Zuschnitte vereinfacht.

Um Verbundwerkstücke gemäß diesem Verfahren rationell herstellen zu können, ist eine Anlage mit einer Schneidmaschine zum Ausschneiden von Zuschnitten aus Flachmaterialbändern, einer Einlegestation zum Werkstückaufbau und einer Steuerungseinrichtung vorgesehen, wobei die Schneidmaschine ein über die Arbeitsfläche eines Schneidtisches verfahrbabres, ein auf eine bestimmte Schnittiefe einstellbares Schneidwerkzeug aufweisendes Schneidaggregat und dem Schneidtisch in Vorschubrichtung vor- bzw. nachgeordnete, Vorschubeinrichtungen aufweisende Rollenaufnahmen für eine Spenderrolle bzw. eine Speicherrolle zum Ab- bzw. Aufwickeln eines Flachmaterialbandes umfaßt und die Einlegestation mit einem oberhalb einer Einlegeform zum Einlegen der Zuschnitte angeordneten optischen Anzeigegerät versehen ist. Zwischen der Schneidmaschine und der Einlegestation ist dabei eine Abnahmestation zum Abnehmen der aus dem Flachmaterial ausgeschnittenen Zuschnitte eingerichtet, die einen Abnahmetisch mit einer am Tischende vorgesehenen Abnahmekante od. dgl. und dem Abnahmetisch in Vorschubrichtung vor- bzw. nachgeordnete, Vorschubeinrichtungen aufweisende Rollenaufnahmen für eine Speicherrolle bzw. eine Abfallrolle umfaßt, und in die Steuerungseinrichtung ist ein auf die Gestalt, Lage und Anordnung der Einzelzuschnitte eines Verbundwerkstückes abgestimmtes Steuerprogramm einlesbar und die Steuerungseinrichtung steuert die Schneidmaschine im Sinne eines fortlaufenden Ausschneidens der Einzelzuschnitte aus dem Flachmaterialband und deren Aufwickeln auf die Speicherrolle in zum Werkstückaufbau umgekehrter Reihenfolge, die Abnahmestation im Sinne eines von den aufeinanderfolgenden Zuschnitten abhängigen schrittweisen Abwickelns des Bandes von der Speicherrolle in werkstückaufbaugerechter Reihenfolge und das Anzeigegerät im Sinne der in dieser Reihenfolge in die Einlegeform einzulegenden Zuschnitte an.

Auf einer solchen Schneidmaschine, wie sie beispielsweise aus der AT-B 393 983 hervorgeht, ist es möglich, die gewünschten Zuschnitte aus dem Flachmaterial auszuschneiden, ohne die Trägerfolie zu durchtrennen, wobei das bandförmige Flachmaterial von einer Spenderrolle abgewickelt und nach dem Schneiden auf einer Speicherrolle aufgewickelt wird. Die Zuschnitte werden fortlaufend in umgekehrter Reihe zum Einlegen aus dem Material ausgeschnitten und nach dem Ausschneiden der für das Zusammensetzen eines Verbundwerkstückes erforderlichen Zuschnitte und deren Aufwickeln auf die Speicherrolle wird diese Speicherrolle in die Abnahmestation gebracht und auf die Speicherrollenaufnahme aufgesteckt. Das Band wird nun über den Abnahmetisch und die Abnahmekante zu einer Abfallrolle geführt und dort eingespannt, worauf dieses Band schrittweise entsprechend der auf dem Band vorhandenen Zuschnittreihenfolge abgewickelt wird. Sobald ein Zuschnitt mit seinem vorderen Ende über die Abnahmekante läuft und etwas vorsteht, wird das Band angehalten, so daß eine Arbeitskraft das nun von der Trägerfolie abstehende Zuschnittende erfassen und den Zuschnitt problemlos abnehmen kann. Der so abgenommene Zuschnitt wird dann einfach in die neben der Abnahmestation vorgesehene Einlegestation getragen, wo bereits über das optische Anzeigegerät in der Einlegeform die für den jeweiligen Zuschnitt richtige Einlegestelle angezeigt wird, indem über dieses Gerät, beispielsweise ein Lasergerät der Zuschnittumriß in die Form projiziert wird. Nach dem Abnehmen des einen Zuschnittes wird das Band in der Abnahmestation weiterbewegt, bis der nächste Zuschnitt mit seinem vorderen Ende über die Abnahmekante vorsteht, so daß nun der nächste Zuschnitt abgenommen und wieder in die Einlegeform gebracht werden kann, wo nun für diesen Zuschnitt die richtige Einlegestelle angezeigt wird. Durch ein entsprechendes Steuerprogramm, das den Aufbau des herzustellenden Verbundwerkstükkes, also die Form, Größe, Anordnung und Legereihenfolge der verwendeten Zuschnitte kennt, sind ohne Schwierigkeiten Schneidmaschine, Abnahmestation und Einlegestation so anzusteuern, daß die einzelnen Zuschnitte in der zum Einlegen umgekehrten Reihenfolge ausgeschnitten werden, daß in der Abnahmestation das Band schrittweise entsprechend den vorhandenen Zuschnitten abgewickelt und angehalten wird und daß schließlich der Reihe nach die jeweiligen Zuschnitte in der nun zum Einlegen richtigen Reihenfolge über das Anzeigegerät in der Einlegeform angezeigt werden. Durch dieses Steuerprogramm werden nicht nur die einzelnen Einrichtungen angesteuert, sondern deren Bewegungen und Arbeitsabläufe auch miteinander koordiniert, so daß ein reibungsloses, schnelles und fehlerfreies Herstellen von Verbundwerkstücken ermöglicht wird.

Ist eine entsprechend leistungsfähige Schneidmaschine vorhanden, können selbstverständlich dieser Schneidmaschine und der vorhandenen Steuerungseinrichtung wenigstens zwei Abnahmestationen und Einlegestationen zugeordnet sein, so daß die Speicherrollen mit den bereits ausgeschnittenen Zuschnitten auf verschiedenen Abnahmestationen und Einlegestationen verarbeitet werden können, was die Herstellungskapazität der Anlage entsprechend erweitert.

Zweckmäßig ist es auch, wenn die Abnahmestation mit einem von der Steuerungseinrichtung unabhängigen Betätigungsschalter für die Vorschubeinrichtung ausgestattet ist, da so vor allem das Abnehmen längerer Zuschnitte durch ein Zuschalten der Vorschubeinrichtung und damit einer fortgesetzten Bandbewegung erleichtert werden kann. Dieses Zuschalten der Vorschubeinrichtung läßt sich in Abhängigkeit von einer entsprechenden Anweisung der Arbeitskraft, in Abhängigkeit von einem verstärkten Anziehen des Zuschnittes und einer Zugbelastung des Bandes od. dgl. durchführen, es unterbricht aber nicht das schrittweise Abwickeln des Bandes von Zuschnittanfang zu Zuschnittanfang.

Nach dem Abnehmen der Zuschnitte von der Trägerfolie wird diese und der verbleibende Schnittabfall auf die Abfallrolle aufgewickelt und läßt sich so einfach entsorgen. Weist die Abnahmestation eine Trenneinrichtung zum Trennen des Schnittabfalls von der Trägerfolie auf, wobei diese Trenneinrichtung vor oder auch nach der Abnahmekante angeordnet sein kann, läßt sich der Schnittabfall vor dem Aufwickeln auf die Abfallrolle entfernen und eine automatische Trennung von Flachmaterialabfall und Trägerfolie erreichen. Als Trenneinrichtung ist jede geeignete Einrichtung einsetzbar, beispielsweise auch eine Trenneinrichtung, wie sie bei der Schneidmaschine gemäß der AT-B 393 983 Verwendung finden kann.

Um materialsparend arbeiten zu können, sind für die Flachmaterialbänder endseitige Verlängerungsstreifen zum Auf- und Abwickeln vorgesehen, welche Verlängerungsstreifen beispielsweise aus Papier oder anderem wertloseren Material bestehen und das Einspannen der Flachmaterialbänder in der Schneidmaschine und der Abnahmestation in der Weise ermöglichen, daß der Schnitt- bzw. Abnahmevorgang sofort mit dem eigentlichen Bandbeginn erfolgen kann und nicht ein Leerbereich für den Einspannvorgang in Kauf genommen werden muß. Diese Verlängerungsstreifen können an Ort und Stelle von einer Magazinrolle abgelängt und an das Flachmaterialband angeklebt werden, so daß sich diese Bänder im Zuge des Einspannens mit wenigen Handgriffen im erforderlichen Ausmaß verlängern lassen.

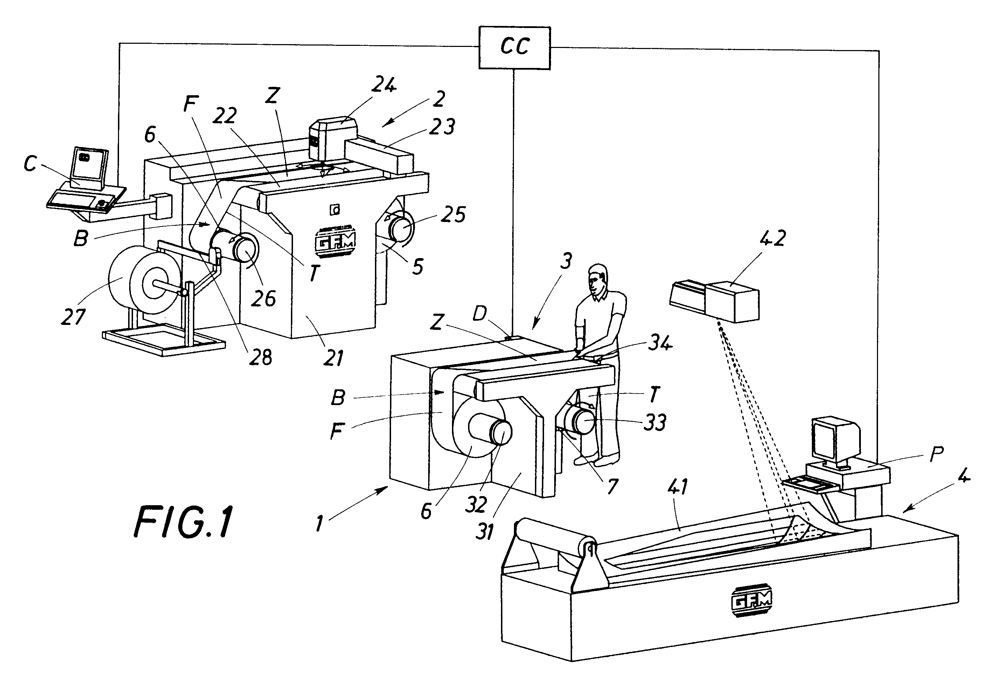

In der Zeichnung ist der Erfindungsgegenstand beispielsweise näher veranschaulicht, und zwar zeigen
- Fig. 1: eine erfindungsgemäße Anlage zum Herstellen eines Verbundwerkstückes im schematischen Schaubild und
- Fig. 2: das Steuerungssystem dieser Anlage in einem Blockschaltbild.

Eine Anlage 1 zum Herstellen von Verbundwerkstücken aus einer Mehrzahl von Einzelzuschnitten umfaßt eine Schneidmaschine 2 zum Ausschneiden der Zuschnitte aus einem auf einer Trägerfolie aufgebrachten Flachmaterial, eine Abnahmestation 3 zum Abnehmen der ausgeschnittenen Zuschnitte von der Trägerfolie und eine Einlegestation 4 zum Aufbau der Verbundwerkstücke aus den Zuschnitten.

Die Schneidmaschine 2 weist einen Schneidtisch 21 mit einer Arbeitsfläche 22 und ein über diese Arbeitsfläche verfahrbares Schneidaggregat 23 mit einem auf eine bestimmte Schnitttiefe einstellbaren Ultraschallmesser 24 auf. In Vorschubrichtung vor dem Schneidtisch 21 ist eine Rollenaufnahme 25 für eine Spenderrolle 5 und in Vorschubrichtung nach dem Schneidtisch 21 eine Rollenaufnahme 26 für eine Speicherrolle 6 vorgesehen, welche Rollenaufnahmen 25; 26 mit nicht weiter dargestellten Vorschubeinrichtungen ausgerüstet sind. Auf der Spenderrolle 5 ist ein Flachmaterialband B aufgewickelt, das aus einer Trägerfolie T und dem Flachmaterial F für die Zuschnitte Z besteht. Dieses Band B wird über die Arbeitsfläche 22 zur Speicherrolle 6 geführt und dort eingespannt, wobei speicherrollenseitig eine Magazinrolle 27 mit einem Papierband vorgesehen ist, das zur Verlängerung des Bandes B beim Einspannen in die Speicherrolle 6 dient. Das Papierband wird dazu einfach von der Magazintrommel 27 abgezogen, mittels einer Schneideinrichtung 28 entsprechend abgelängt und mit dem Bandanfang verklebt, so daß das Band auch im Anfangsbereich zum Ausschneiden der Zuschnitte genutzt werden kann. Aus dem Flachmaterial F werden nun fortlaufend Zuschnitte Z ausgeschnitten, ohne aber die Trägerfolie T zu durchtrennen, und das Band B mit den ausgeschnittenen Zuschnitten Z wird auf die Speicherrolle 6 aufgewickelt. Dabei werden die Zuschnitte in einer Reihenfolge geschnitten, die der beim Werkstückaufbau erforderlichen Reihenfolge entgegengesetzt ist, die Gestalt der einzelnen Zuschnitte aber im Sinne des Verlegens seitenrichtig bleibt und kein Wenden erfordert.

Die Abnahmestation 3 besteht aus einem Abnahmetisch 31, dem in Vorschubrichtung eine Rollenaufnahme 32 vor- und eine Rollenaufnahme 33 nachgeordnet sind, welche Rollenaufnahmen 32, 33 ebenfalls nicht weiter dargestellte Vorschubeinrichtungen aufweisen und zum Aufstecken einerseits der Speicherrolle 6, anderseits einer Abfallrolle 7 dienen. Am Ende des Abnahmetisches 31 ist eine Abnahmekante 34 zum Umlenken des darübergeführten Bandes vorgesehen, welche Abnahmekante 34 als winkeliges Profil, aber auch als Rundung bzw. Rolle mit kleinem Durchmesser ausgebildet sein kann. Das Band B mit den ausgeschnittenen Zuschnitten Z wird nun von der auf die Aufnahme 32 aufgesteckten Speicherrolle 6 über den Tisch 31 und die Abnahmekante 34 zur Abfallrolle 7 geführt, wobei wiederum ein Verlängerungsstreifen das Einspannen erleichtert. Die Vorschubeinrichtung bewirkt dann ein schrittweises Abwickeln und bei jedem Schritt wird das Band so angehalten, daß ein Zuschnitt Z mit seinem vorderen Ende gerade über die Abnahmekante 34 vorsteht und dieses Ende von der Trägerfolie T griffgerecht abhebt. Hier läßt sich dieser Zuschnitt nun von einer Arbeitskraft händisch erfassen und abnehmen und zum Aufbau des Verbundwerkstückes verwenden.

Dazu ist in der Einlegestation 4 eine Einlegeform 41 zum Einlegen der Zuschnitte Z vorgesehen, wobei ein oberhalb der Einlegeform 41 angeordnetes optisches Anzeigegerät 42 die jeweilige Einlegestelle anzeigt. Der in der Abnahmestation 3 abgenommene Zuschnitt Z kann daher sofort an der richtigen Stelle in der Einlegeform 41 eingelegt werden, wobei durch die nun einlegerichtige Reihenfolge der in der Abnahmestation ankommenden Zuschnitte dieses Einlegen schnell und rationell durchführbar ist.

Zur Steuerung der Anlage 1 gibt es eine Steuerungseinrichtung CC, die nach einem geeigneten Steuerprogramm die Maschinensteuerung C der Schneidmaschine 2, die Stationssteuerung D der Abnahmestation 3 sowie die Stationssteuerung P der Einlegestation 4 für das Anzeigegerät 42 ansteuert. Das Steuerprogramm berücksichtigt dabei die entsprechend eingelesenen Daten des herzustellenden Verbundwerkstückes, die dazu erforderlichen Zuschnitte, deren Größe, Lage, Anordnung und Legereihenfolge und koordiniert so auf rationelle Weise die Funktionen der Schneidmaschine, Abnahmestation und Einlegestation. Die zum Herstellen eines Werkstückes erforderlichen Zuschnitte Z werden in umgekehrter Reihenfolge des Einlegens in die Einlegeform fortlaufend aus einem Band B ausgeschnitten und das Band auf die Speicherrolle 6 aufgewickelt. Nun wird diese Speicherrolle 6 in die Abnahmestation 3 gebracht und über die Steuerungseinrichtung wird dieses Band B schrittweise von Zuschnitt zu Zuschnitt abgewickelt, so daß in der richtigen Reihefolge des Einlegens die Zuschnitte an der Abnahmekante 34 der Arbeitskraft angeboten werden. Diese Arbeitskraft braucht daher diese Zuschnitte nur mehr der Reihe nach abzunehmen und in die Einlegeform 41 einzulegen, wo die Einlegestelle schon ordnungsgemäß vom Anzeigegerät 42 angezeigt wird.

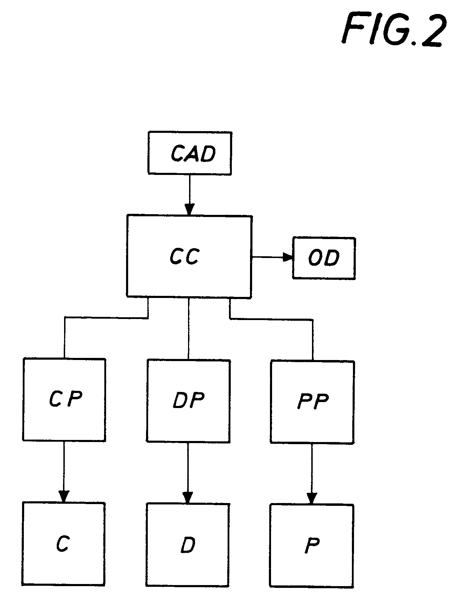

Wie in Fig. 2 angedeutet, wird in die Steuerungseinrichtung CC beispielsweise über ein CAD-System das Programm mit den Daten über die Verbundwerkstücke eingelesen, welche Steuerungseinrichtung dann die jeweiligen Steuerprogramme CP für die Schneidmaschinen 2, DP für die Abnahmestation 3 und PP für die Einlegestation 4 erstellt und diesen Programmen gemäß die jeweiligen Maschinen- und Anlagensteuerungen C, D, P ansteuert. Über einen zusätzlichen Ausgang OD lassen sich dabei verschiedene programmspezifische Daten ausdrucken oder auf andere Weise weiterverarbeiten.

## Patentansprüche

1. Verfahren zum Herstellen eines Verbundwerkstückes aus einer Mehrzahl von Einzelzuschnitten (Z), nach dem aus einem zusammen mit einer Trägerfolie (T) als Band (B) von einer Spenderrolle (5) abgewickelten Flachmaterial (F) die Einzelzuschnitte (Z) ohne ein Durchtrennen der Trägerfolie (T) ausgeschnitten, von der Trägerfolie (T) abgenommen und zum Werkstückaufbau in einer bestimmten Reihenfolge und Anordnung unter optischer Anzeige der jeweiligen Einlegestelle in eine Form (41) eingelegt werden, dadurch gekennzeichnet, daß die Zuschnitte in einer zum Einlegen umgekehrten Reihenfolge fortlaufend aus dem Flachmaterial ausgeschnitten und mit der Trägerfolie auf eine Speicherrolle aufgewickelt werden und daß dann das Band von der Speicherrolle in durch die aufeinanderfolgenden Zuschnitte vorgegebenen Schritten abgewickelt und bei jedem Abwickelschritt ein Zuschnitt vom Band abgenommen und an der angezeigten Stelle in die Form eingelegt wird.

2. Verfahren nach Anspruch 1, dadurch gekennzeichnet, daß das Band beim Abwickeln von der Speicherrolle über eine Abnahmekante od. dgl. umgelenkt und bei jedem Abwickelschritt so angehalten wird, daß das in Abwickelrichtung vordere Ende eines Zuschnittes jeweils gerade über die Abnahmekante abnahmegerecht vorsteht.

3. Verfahren nach Anspruch 1 oder 2, dadurch gekennzeichnet, daß das Band zum Abnehmen langer Zuschnitte nach dem schrittbedingten Anhalten in Abhängigkeit von der jeweiligen Zuschnittlänge weiterbewegt wird.

4. Anlage zum Durchführen des Verfahrens nach einem der Ansprüche 1 bis 3, mit einer Schneidmaschine zum Ausschneiden von Zuschnitten aus Flachmaterialbändern, die ein über die Arbeitsfläche eines Schneidtisches verfahrbares, ein auf eine bestimmte Schnittiefe einstellbares Schneidwerkzeug aufnehmendes Schneidaggregat und dem Schneidtisch in Vorschubrichtung vor- bzw. nachgeordnete, Vorschubeinrichtungen aufweisende Rollenaufnahmen für eine Spenderrolle bzw. eine Speicherrolle zum Ab- bzw. Aufwickeln eines Flachmaterialbandes umfaßt, mit einer Einlegestation zum Werkstückaufbau, bei der oberhalb einer Einlegeform zum Einlegen der Zuschnitte ein optisches Anzeigegerät vorgesehen ist, und mit einer Steuerungseinrichtung zum Ansteuern der Schneidmaschine und des Anzeigegerätes der Einlegestation, dadurch gekennzeichnet, daß zwischen der Schneidmaschine (2) und der Einlegestation (4) eine Abnahmestaion (3) zum Abnehmen der aus dem Flachmaterial (F) ausgeschnittenen Zuschnitte (Z) eingerichtet ist, die einen Abnahmetisch (31) mit einer am Tischende vorgesehenen Abnahmekante (34) od. dgl. und dem Abnahmetisch (31) in Vorschubrichtung vor- bzw. nachgeordnete, Vorschubeinrichtungen aufweisende Rollenaufnahmen (32, 33) für eine Speicherrolle (6) bzw. eine Abfallrolle (7) umfaßt, und daß in die Steuerungseinrichtung (CC) ein auf die Gestalt, Lage und Anordnung der Einzelzuschnitte eines Verbundwerkstückes abgestimmtes Steuerprogramm einlesbar ist und die Steuerungseinrichtung (CC) die Schneidmaschine (2) im Sinne eines fortlaufenden Ausschneidens der Einzelzuschnitte aus dem Flachmaterialband und deren Aufwikkeln auf die Speicherrolle (6) in zum Werkstückaufbau umgekehrter Reihenfolge, die Abnahmestation (3) im Sinne eines von den aufeinanderfolgenden Zuschnitten abhängigen schrittweisen Abwickelns des Bandes von der Speicherrolle in werkstückaufbaugerechter Reihenfolge und das Anzeigegerät im Sinne der in dieser Reihenfolge in die Einlegeform (42) einzulegenden Zuschnitte ansteuert.

5. Anlage nach Anspruch 4, dadurch gekennzeichnet, daß einer Schneidmaschine und einer Steuerungseinrichtung wenigstens zwei Abnahmestationen und Einlegestationen zugeordnet sind.

6. Anlage nach Anspruch 4 oder 5, dadurch gekennzeichnet, daß die Abnahmestation mit einem von der Steuerungseinrichtung unabhängigen Betätigungsschalter für die Vorschubeinrichtung ausgestattet ist.

7. Anlage nach einem der Ansprüche 4 bis 6, dadurch gekennzeichnet, daß die Abnahmestation eine Trenneinrichtung zum Trennen des Schnittabfalls von der Trägerfolie aufweist.

8. Anlage nach einem der Ansprüche 4 bis 7, dadurch gekennzeichnet, daß für die Flachmaterialbänder endseitige Verlängerungsstreifen zum Auf- und Abwickeln vorgesehen sind.
